# EUROPEAN PATENT APPLICATION

(11) **EP 4 821 738 A1**
(43) Date of publication of application: **14.10.2026**
(21) Application number: 25168907.1
(22) Date of filing: 07.04.2025
(51) Int. Cl.: B60L 1/08, B60H 1/00, B60L 58/12, B60L 58/14, B60W 50/00

(54) **SYSTEM AND METHOD OF ESTIMATING A REMAINING OPERATIONAL TIME OF THE VEHICLE BATTERY FOR A VEHICLE DURING STAND STILL**

(71) Applicant: Volvo Truck Corporation, 405 08 Göteborg (SE)
(72) Inventor: LUNDSTEDT, Björn, 443 39 LERUM (SE); VARGHESE, Sonu Geevarghese, 690101 MAVELIKARA (IN)
(74) Representative: Kransell & Wennborg KB

(57) **Abstract**

A computer system (100) comprising processing circuitry (102) configured to: obtain (200) cab-related data, including at least one of cab type (106), cab volume (108), presence of a sleeper cab (110), and window area (112) of a cab of a vehicle; obtain (202) a parameter indicative of a climate control setting (114) of the cab; obtain (204) a parameter indicative of a status and capacity of a vehicle battery (104); estimate (206) a remaining operational time of the vehicle battery during standstill using a computational model that takes as input at least the obtained cab-related data, the parameter indictive of a climate control setting, and the parameter indicative of the status and capacity of the vehicle battery.

## Description

### TECHNICAL FIELD

The disclosure relates generally to an energy system of a vehicle. In particular aspects, the disclosure relates to system and method of estimating electrical energy backup for a vehicle during stand still. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Vehicles equipped with onboard electrical systems, particularly those used for long-haul transportation and overnight stays, rely on battery power to sustain various auxiliary loads such as climate control, lighting, and electronic devices. Inadequate estimation of remaining battery capacity during standstill can lead to unexpected power depletion, causing inconvenience to drivers and potential operational disruptions.

Existing systems typically provide a low-battery warning when charge levels fall below a predefined threshold. However, these approaches often do not provide sufficiently accurate or timely indications of battery depletion, which may lead to ineffective energy management and unnecessary vehicle downtime. Additionally, current methods may not offer guidance on how to mitigate power shortages or extend battery life.

Accordingly, there is a need for improved techniques to better assess and manage vehicle battery usage during standstill periods.

### SUMMARY

According to a first aspect of the disclosure, there is provided a computer system comprising processing circuitry configured to: obtain cab-related data, including at least one of cab type, cab volume, presence of a sleeper cab, and window area of a cab of a vehicle; obtain a parameter indicative of a climate control setting of the cab; obtain a parameter indicative of a status and capacity of a vehicle battery; estimate a remaining operational time of the vehicle battery during standstill using a computational model that takes as input at least the obtained cab-related data, the parameter indictive of a climate control setting, and the parameter indicative of the status and capacity of the vehicle battery.

The first aspect of the disclosure may seek to provide an improved method for estimating the remaining operational time of a vehicle battery during standstill by considering multiple influencing factors, including cab-related data, climate control settings, and battery status. Conventional approaches often rely solely on state-of-charge measurements, which do not account for variations in energy consumption due to external conditions, cab characteristics, or driver preferences, leading to inaccurate predictions and potential power shortages. A technical benefit may include enhanced accuracy in reaming battery time estimation by incorporating multiple parameters that influence energy consumption. By using a computational model that takes cab-related data, climate control settings, and battery status as inputs, the system can generate a more precise estimation of battery depletion time. This may result in improved energy planning, reduced risk of unexpected battery drain, and better driver awareness of power availability.

Optionally in some examples, including in at least one preferred example, the computational model assigns weighted factors to different input parameters, the weights being representative of their relative impact on energy consumption, including at least a first weight for cab volume, a second weight for climate control settings, and a third weight for battery state of charge and capacity. A technical benefit may include improved accuracy in estimating the remaining operational time of the vehicle battery by accounting for the varying degrees of influence that different parameters have on energy consumption. By assigning appropriate weights, the system can prioritize key factors, such as cab size or climate settings, ensuring a more reliable prediction of battery depletion.

Optionally in some examples, including in at least one preferred example, the computational model retrieves historical energy consumption data from a lookup table, the historical data including at least past vehicle energy consumption patterns during standstill periods, driver-specific historical usage of climate control, and/or external climate conditions for similar parking scenarios. A technical benefit may include enhanced prediction accuracy by incorporating real-world usage patterns into the estimation process. By utilizing historical data, the system can recognize trends in energy consumption and adapt predictions based on past behaviors and external conditions, leading to better-informed energy management decisions and a more accurate evaluation of remaining battery time.

Optionally in some examples, including in at least one preferred example, the computational model estimates the remaining operational time of the vehicle battery using a multi-step process, comprising primary estimation of the remaining operational time based on real-time battery state of charge and current discharge rate, and adjustment of the remaining operational time using input parameters, including cab-related data and climate control settings. A technical benefit may include an improved estimation process that considers both instantaneous battery conditions and external influencing factors, leading to a more accurate and adaptable energy prediction system.

Optionally in some examples, including in at least one preferred example, the computational model further refines the remaining operational time through an AI-based predictive model, incorporating historical consumption patterns and weather forecasts. A technical benefit may include more dynamic and adaptive energy estimations, as AI-based modeling allows the system to continuously improve predictions by learning from past vehicle usage and external conditions, thereby increasing the reliability of the remaining time estimation.

Optionally in some examples, including in at least one preferred example, the computational model applies a combined correction factor (K-factor), wherein the K-factor represents the aggregated impact of all predicted loads on battery consumption, the K-factor is less than 1 and is applied as a multiplier to the primary estimated remaining operational time of the battery, and the adjusted remaining operational time is determined by multiplying the primary estimated remaining operational time by the K-factor. A technical benefit may include a more refined and realistic estimation of battery depletion, as the K-factor accounts for multiple energy-consuming loads and ensures that the estimated remaining time does not exceed realistic operational expectations.

Optionally in some examples, including in at least one preferred example, the processing circuitry is further configured to obtain parking time data from logistics planning, the parking time data including a predicted parking duration based on a planned vehicle route and/or scheduling constraints. A technical benefit may include improved planning and energy management, as the system can anticipate expected standstill durations and adjust battery consumption strategies accordingly, reducing the risk of unexpected power depletion.

Optionally in some examples, including in at least one preferred example, the processing circuitry is further configured to obtain parking time data from mandatory driving and rest regulations, the parking time data including a required minimum rest period based on legal restrictions on driving hours. A technical benefit may include regulatory compliance and better energy planning, as the system ensures that energy predictions align with legally mandated rest periods, preventing scenarios where the driver is left without sufficient power during required stops.

Optionally in some examples, including in at least one preferred example, the processing circuitry is further configured to receive parking time data entered manually by the driver, the parking time data representing an expected duration of vehicle standstill. A technical benefit may include increased flexibility and customization, allowing drivers to manually input their expected parking duration and enabling the system to tailor energy predictions based on individual preferences or unforeseen changes in schedule.

Optionally in some examples, including in at least one preferred example, the computational model compares the estimated remaining operational time of the vehicle battery to the obtained parking time data to determine whether the battery capacity is sufficient for the expected standstill period. A technical benefit may include proactive energy management, as the system can preemptively assess whether available battery capacity aligns with the expected parking duration, allowing for adjustments before energy shortages occur.

Optionally in some examples, including in at least one preferred example, the processing circuitry is further configured to generate a user notification if the estimated remaining operational time of the battery is less than the predicted parking duration, the notification including at least one of a warning indicating insufficient battery capacity, a recommendation to reduce energy consumption by adjusting vehicle settings, or a suggestion to relocate to a site where charging or idling is permitted. A technical benefit may include early warning and decision support for the driver, ensuring that potential battery depletion issues are addressed before they become critical, thereby preventing disruptions in vehicle operations.

Optionally in some examples, including in at least one preferred example, the processing circuitry is further configured to generate a warning notification if the estimated remaining operational time of the battery is less than the predicted parking duration, the warning indicating insufficient battery capacity. A technical benefit may include increased situational awareness for the driver, as early warnings allow for timely intervention, such as reducing power consumption or seeking alternative charging options.

Optionally in some examples, including in at least one preferred example, the processing circuitry is further configured to generate a recommendation to reduce energy consumption by adjusting vehicle settings if the estimated remaining operational time of the battery is less than the predicted parking duration. A technical benefit may include improved energy efficiency, as the system can suggest ways to extend battery life by optimizing non-essential energy usage, reducing unnecessary power consumption during standstill periods.

Optionally in some examples, including in at least one preferred example, the processing circuitry is further configured to recommend charging the battery using an external charger if the estimated remaining operational time is less than the predicted parking duration. A technical benefit may include better contingency planning, as drivers can be directed to external charging solutions before reaching critical battery levels, ensuring uninterrupted operation of vehicle systems.

Optionally in some examples, including in at least one preferred example, the processing circuitry is further configured to generate a suggestion to charge the battery if the estimated remaining operational time of the battery is less than the predicted parking duration, the suggestion including advising on internal charging options based on available power sources of the vehicle, and wherein the processing circuitry is further configured to determine whether the vehicle is an internal combustion engine vehicle, determine whether idling is permitted by local regulations, and if idling is permitted, recommend idling the engine to charge the battery during standstill. A technical benefit may include optimized use of vehicle resources, as the system can assess the feasibility of idling as a charging solution and provide guidance to ensure compliance with local regulations while maintaining sufficient battery levels.

Optionally in some examples, including in at least one preferred example, the processing circuitry is further configured to generate a suggestion to charge the battery if the estimated remaining operational time of the battery is less than the predicted parking duration, the suggestion including advising on internal charging options based on available power sources of the vehicle, and wherein the processing circuitry is further configured to determine whether the vehicle comprises a propulsion battery, determine whether energy from the propulsion battery can be used to charge the vehicle battery, and if energy from the propulsion battery can be used to charge the vehicle battery, recommend enabling internal charging from the propulsion battery to extend operational time. A technical benefit may include enhanced energy management for battery electric vehicles, as the system can intelligently determine whether propulsion battery energy can be repurposed to extend operational time during stand still, thereby maximizing battery efficiency without external intervention.

According to a second aspect of the disclosure, it is provided a computer-implemented method, comprising: obtaining, by processing circuitry of a computer system, cab-related data including at least one of cab type, cab volume, presence of a sleeper cab, or window area; obtaining, by the processing circuitry, a parameter indicative of a climate control setting of the vehicle; obtaining, by the processing circuitry, a parameter indicative of a status and capacity of a vehicle battery; estimating, by the processing circuitry, a remaining operational time of the vehicle battery during standstill using a computational model that takes as input at least the obtained cab-related data, the parameter indicative of the climate control setting, and the parameter indicative of the status and capacity of the vehicle battery.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
Fig. 1 is an exemplary system diagram of a computer system comprising processing circuitry configured to estimate a remaining operational time of the vehicle battery during standstill according to an example.
Fig. 2 is a flow chart of an exemplary computer implemented method to estimate, a remaining operational time of the vehicle battery during according to an example.
Fig. 3 is an exemplary system diagram of the computer system according to an example.
Fig. 4 is s vehicle comprising a computer system according to an example.
Fig. 5 is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

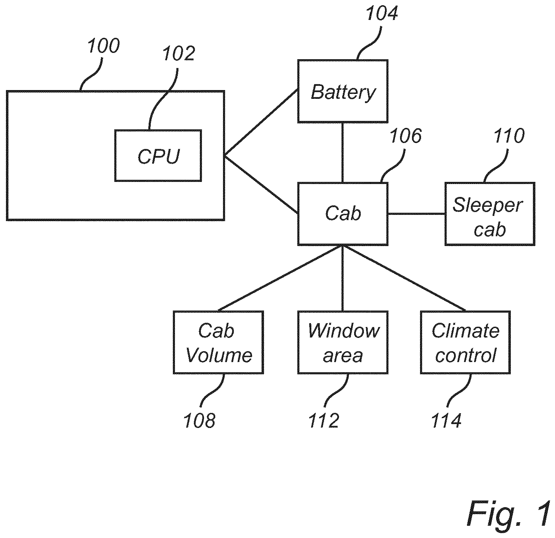

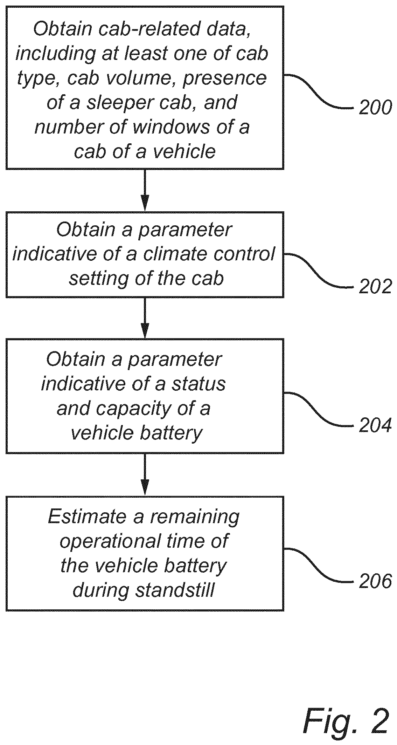

Fig. 1 is an exemplary system diagram of a computer system 100 configured to estimate the remaining operational time of a vehicle battery 104 during standstill. The system will be described with further reference to Fig. 2 outlining actions of the computer system 100. Fig. 2 further describes steps of a method according to an example.

The computer system of Fig. 1 comprises processing circuitry 102, which executes a computational model to analyze and predict energy usage based on data obtained from various sources. In particular, the processing circuitry 102 is configured to obtain cab-related data 200, which includes at least one of cab type 106, cab volume 108, presence of a sleeper cab 110, and window area 112. The described parameters may directly influence energy consumption of the vehicle, particularly regarding climate control and insulation properties. Cab type 106 affects the thermal properties and insulation efficiency of the vehicle. Certain cab designs may provide better insulation, reducing the workload on the climate control system and extending battery life. Cab volume 108 is a critical factor in determining climate control energy consumption since a larger cab volume requires more energy to heat or cool, thereby reducing the remaining operational time of the battery 104. Conversely, a smaller cab volume may retain heat or cold more efficiently, leading to lower energy demands. Presence of a sleeper cab 110 introduces additional energy requirements, as sleeper cabs typically include auxiliary systems such as lighting, ventilation, and personal comfort settings for drivers resting in the vehicle. The added electrical load contributes to increased power consumption, thus impacting battery longevity during standstill. Window area 112 plays a significant role in thermal regulation, as larger window areas result in greater heat exchange with the external environment. In cold conditions, heat loss through windows increases climate control demand, while in hot conditions, increased solar heat gain raises cooling requirements. Both scenarios contribute to faster battery depletion.

The system further obtains 202 a parameter indicative of a climate control setting 114 of the cab. Climate control settings 114 determine the power consumption rate of heating, ventilation, and air conditioning systems. A higher cooling or heating setting will result in greater energy draw from the battery 104, while an optimized or energy-saving mode can extend battery life.

In addition, the system obtains 204 a parameter indicative of a status and capacity of the vehicle battery 104. This data provides information at least of the state of charge and total capacity of the batter, and possibly also of battery health, and discharge rate, allowing the computational model to more accurately predict the remaining operational time. The remaining battery capacity is relevant for determining how long auxiliary systems, such as climate control, can be sustained before requiring recharging.

The obtained cab-related data 200, climate control setting 114, and battery status 104 serve as input to the computational model executed by the processing circuitry 102. The computational model processes the inputs to estimate 206 the remaining operational time of the vehicle battery during standstill. Fig. 2 illustrates the sequence of actions carried out by the computer system 100 to arrive at this estimation. By taking into account multiple interdependent factors that influence energy consumption, the computational model aims to provide a more accurate and dynamic prediction compared to conventional battery monitoring systems.

The computational model considers how each input parameter affects power consumption. The impact of cab-related data 200 is evaluated in conjunction with climate control setting 114 to determine the expected energy demand for maintaining the desired cab environment. For instance, if cab volume 108 is large and the climate control setting 114 requires significant heating or cooling, the model may predict a higher rate of power consumption. Similarly, if window area 112 is extensive, leading to greater heat exchange with the external environment, the model may adjust the estimated remaining time accordingly. By incorporating these variables, the system can generate a prediction that accounts for both static factors, such as cab type 106, and dynamic factors, such as the current climate control setting 114.

The battery status and capacity 104 serve as a baseline for the estimation. The system determines the available energy by assessing the state of charge and total battery capacity. If additional battery parameters are available, such as discharge rate or overall battery health, the computational model can refine its estimation further. A battery with reduced capacity due to aging may result in a lower estimated operational time, even if energy consumption factors remain unchanged.

The estimation process 206 aims to provide an accurate and actionable prediction that assists the driver in managing power consumption during standstill. The predicted remaining operational time can be used as input for further actions, such as generating notifications or recommendations to optimize energy usage. The model may further be configured to continuously consider real-time parameters so that the system can dynamically update the estimated remaining operational time if conditions change, such as a modification in climate control settings.

The type of battery technology used in the vehicle may influence the estimation of remaining operational time, as different chemistries exhibit varying capacity, discharge characteristics, and efficiency. The system is designed to operate with various battery types, including lithium-ion, lead-acid, sodium-based, and solid-state batteries, as well as future advancements in energy storage. By ensuring compatibility with multiple battery technologies, the system remains adaptable to evolving vehicle power systems while maintaining accurate energy consumption predictions.

Part or all of the calculations for estimating the remaining operational time of the vehicle battery could also be performed remotely using cloud-based or other remote computation resources. The system may transmit relevant input data, such as cab-related parameters, climate control settings, and battery status, to a remote server where a more complex or resource-intensive computational model can process the information. Cloud-based processing allows for advanced modeling techniques, access to large-scale historical datasets, and continuous updates to improve prediction accuracy. Alternatively, or in combination, the system may perform initial estimations locally using the processing circuitry 102 and refine the results with remote computation when network connectivity is available. This flexibility enables efficient resource allocation while ensuring that energy predictions remain accurate and up to date.

The computational model may further apply weighted factors to different input parameters to refine the estimation of the remaining operational time of the vehicle battery. Since various factors influence energy consumption to different extents, assigning appropriate weights allows the model to account for their relative impact. A first weight is assigned to cab volume to reflect its effect on climate control energy demand, as larger cabs require more power to maintain desired temperature conditions. A second weight is assigned to climate control settings to adjust for variations in heating or cooling power requirements, ensuring that different operational modes are properly considered. A third weight is assigned to battery state of charge and capacity to reflect their influence on the accuracy of the remaining time estimate, as battery characteristics determine how energy is stored and discharged under different load conditions. By incorporating these weighted factors, the system improves the reliability of its predictions and enables better energy management during standstill.

To further enhance prediction accuracy, the computational model may retrieve historical energy consumption data from a lookup table. The historical data may include past vehicle energy consumption patterns during standstill periods, driver-specific historical usage of climate control, and external climate conditions for similar parking scenarios. By using historical data, the model can refine its estimations based on historical energy consumption rather than relying only on instantaneous measurements. Accounting for past patterns allows the system to anticipate increased climate control energy demand in larger cabs, adjust for variations in heating or cooling requirements, and improve the accuracy of the remaining time estimate. For example, if historical data indicates that a specific cab type requires significantly more energy under certain weather conditions, the model can adjust its predictions accordingly. Historical data may also be attributed to specific drivers so that the energy consumption patter for a particular drive can be taken into account.

The computational model may estimates the remaining operational time of the vehicle battery using a multi-step process that begins with a primary estimation based on real-time battery state of charge and current discharge rate. This initial estimation is can be received from the battery management system, which continuously monitors battery parameters. While this provides a baseline estimate, it does not account for external factors such as cab characteristics and climate control settings. Therefore, the model applies an adjustment step that incorporates cab-related data and climate control settings, refining the initial estimate to provide a more comprehensive prediction. By integrating both real-time battery data and external influencing factors, the model ensures that the remaining time estimate more accurately reflects actual energy consumption conditions.

The system may further refine the remaining operational time estimation through an AI-based predictive model. This AI-based refinement incorporates historical consumption patterns and weather forecasts to improve the accuracy of the prediction. By analyzing past energy usage under similar conditions, the model can adjust its estimates based on observed trends rather than relying purely on static calculations. The inclusion of weather forecasts allows the system to anticipate the impact of external temperature fluctuations on climate control demand. For instance, if an incoming cold front is expected, the model can factor in the increased heating requirement and adjust the estimated battery duration accordingly. This AI-driven approach enhances the adaptability of the system, allowing it to continuously learn from new data and improve its predictions over time.

The computational model may further refine the estimated remaining operational time of the vehicle battery by applying a combined correction factor, referred to as the K-factor. The K-factor represents the aggregated impact of all predicted loads on battery consumption, ensuring that the estimation accounts for the total energy demand rather than individual parameters in isolation. Since multiple energy-consuming components, such as climate control systems, auxiliary devices, and vehicle electronics, contribute to power usage, the K-factor provides a single adjustment factor that reflects their combined effect.

The K-factor is less than 1 and is applied as a multiplier to the primary estimated remaining operational time of the battery. This adjustment ensures that the initial estimation, typically derived from battery state of charge and discharge rate, is corrected to account for real-world consumption conditions. By incorporating the K-factor, the system compensates for variations in power demand that may not be fully captured by the initial estimation alone.

The adjusted remaining operational time is determined by multiplying the primary estimated remaining operational time by the K-factor. This results in a more realistic prediction that reflects the actual conditions affecting battery performance. For example, if the primary estimation suggests a remaining time of 10 hours, but the aggregated loads indicate higher-than-expected consumption, a K-factor of 0.8 would adjust the estimate to 8 hours., thereby allowing for more accurate planning of energy use during standstill. By dynamically adjusting the K-factor based on predicted loads, the system enhances the reliability of its battery lifetime estimation, reducing the risk of unexpected power depletion.

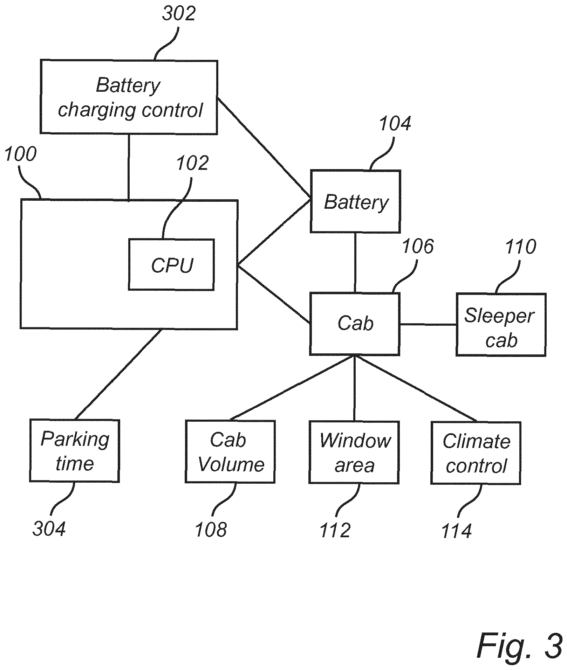

The computer system is further configured to obtain parking time data 304, which represents the expected duration the vehicle will remain stationary, as schematically illustrated in the system diagram of Fig. 3. Parking time data 304 may be obtained from different sources, allowing the system to adapt its predictions based on planned logistics, regulatory requirements, or manual driver input. By incorporating parking time data 304, the system ensures that the estimated remaining operational time of the vehicle battery is evaluated in relation to the expected standstill duration, providing a more practical and actionable prediction.

One source of parking time data 304 is logistics planning, which provides a predicted parking duration based on a planned vehicle route and scheduling constraints. This information may be derived from fleet management systems, pre-determined delivery schedules, or estimated stop durations at designated rest areas. By integrating logistics planning data, the system can align its battery usage predictions with operational requirements, ensuring that sufficient power is available for the entire planned stop duration.

Another source of parking time data 304 is mandatory driving and rest regulations, which define the required minimum rest period based on legal restrictions on driving hours. Regulatory frameworks often dictate the duration of rest breaks and overnight stops for drivers, depending on jurisdictional requirements. By obtaining this information, the system can account for legally mandated standstill periods, ensuring that battery capacity is assessed in relation to compliance with driving regulations.

In addition to automated data sources, the system may also be configured to receive parking time data 304 entered manually by the driver. This allows for flexibility when unexpected changes occur, such as extended breaks due to weather conditions, traffic delays, or personal preferences. Manual input enables the driver to override or refine the estimated parking duration, ensuring that the system adapts to real-time decision-making.

Once the parking time data 304 has been obtained, the computational model compares the estimated remaining operational time of the vehicle battery to the expected standstill period. If the estimated battery duration is shorter than the anticipated parking time, the system may take further action, such as generating notifications or recommending adjustments to energy consumption. This comparison ensures that the driver is aware of any potential power shortages in advance, allowing for proactive energy management and minimizing the risk of battery depletion before the vehicle is ready to resume operation.

If the estimated remaining operational time of the battery is less than the predicted parking duration, the computer system may generate a user notification to inform the driver of a potential power shortage. This notification serves as a proactive measure, allowing the driver to take appropriate action before the battery reaches a critically low level. The notification may include a warning indicating insufficient battery capacity, ensuring that the driver is made aware of the issue in time to respond. Additionally, the system may generate a recommendation to reduce energy consumption by adjusting vehicle settings, such as optimizing climate control parameters. The system may also suggest turning off low-priority electrical consumers within the vehicle, such as entertainment systems, interior lighting, or other non-essential loads, to extend battery duration. In cases where external charging or energy replenishment is necessary, the system may also suggest relocating to a site where charging or idling is permitted, providing the driver with practical options to extend battery life.

The processing circuitry may be configured to generate a warning notification specifically to indicate insufficient battery capacity when the estimated remaining operational time does not meet the required parking duration. This warning serves as a direct alert to the driver, prompting immediate awareness of the issue. Unlike general recommendations, the warning notification is intended to emphasize urgency, ensuring that the driver can quickly assess the situation and take necessary steps to prevent unexpected battery depletion.

If the estimated remaining operational time of the battery is less than the predicted parking duration, the computer system 100 may generate a suggestion to charge 302 the battery, advising on internal charging options based on the available power sources of the vehicle. This ensures that the driver is made aware of potential charging opportunities to extend battery life during standstill. The system evaluates whether the vehicle is equipped with an internal combustion engine and determines whether idling is permitted based on local regulations. If idling is permitted, the system may recommend idling the engine to charge the battery, thereby preventing unexpected power depletion.

In vehicles equipped with a propulsion battery, such as battery electric vehicles or hybrid-electric vehicles, the system determines whether energy from the propulsion battery can be used to charge the vehicle auxiliary battery. If the propulsion battery has sufficient charge, the system may recommend enabling internal charging to extend operational time. This function allows for an efficient redistribution of available power, ensuring that onboard systems remain powered even if external charging is unavailable.

In some examples, the system may not only generate recommendations but also provide automatic control of charging. For internal combustion engine vehicles, the system may autonomously start the engine and enable idling if local regulations permit, ensuring that the battery is recharged without requiring manual intervention. Similarly, for vehicles with a propulsion battery, the system may automatically activate an internal charging mode when necessary, optimizing power management based on real-time battery status and expected energy demand. By incorporating both advisory and automatic control functions, the system enhances energy availability while reducing driver workload, ensuring that the vehicle remains operational for the required standstill duration.

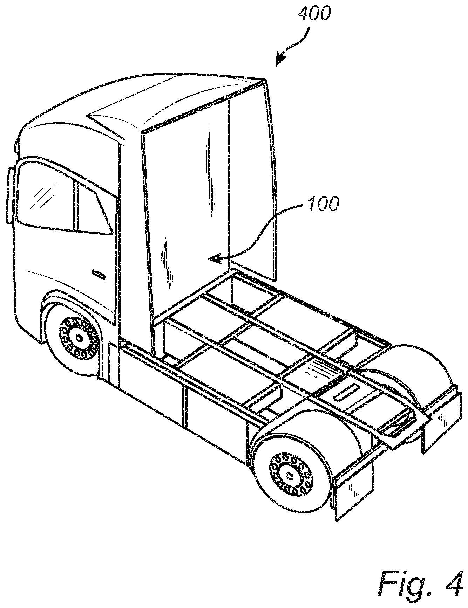

Fig. 4 illustrates a vehicle 400 comprising the computer system 100 as described in any of the preceding examples. The computer system 100, including the processing circuitry 102, is integrated into the vehicle 400 to estimate 206 a remaining operational time of the vehicle battery during standstill.

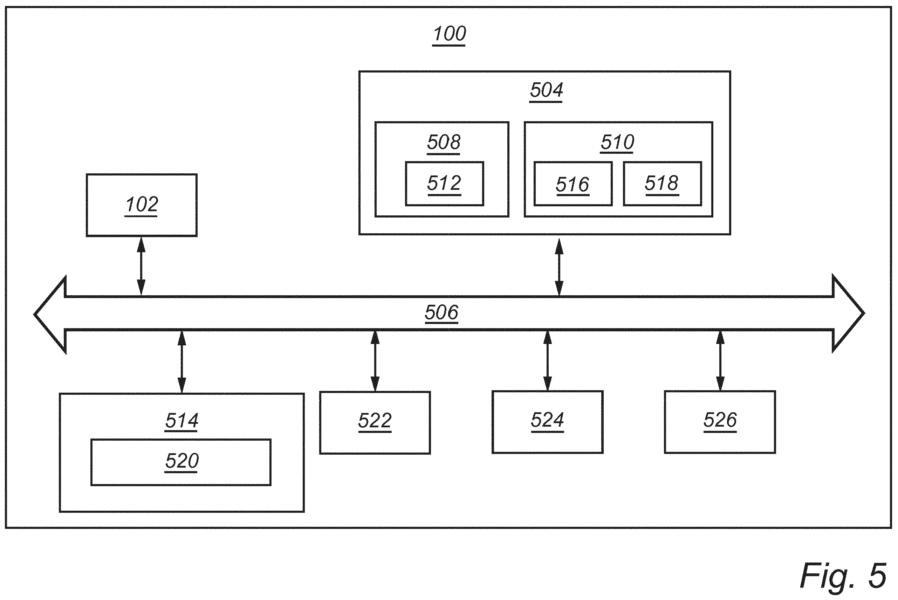

Fig. 5 is a schematic diagram of a computer system 100 for implementing examples disclosed herein. The computer system 100 is adapted to execute instructions from a computer-readable medium to perform these and/or any of the functions or processing described herein. The computer system 100 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 100 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 100 may comprise at least one computing device or electronic device capable of including firmware, hardware, and/or executing software instructions to implement the functionality described herein. The computer system 100 may include processing circuitry 102 (e.g., processing circuitry including one or more processor devices or control units), a memory 504, and a system bus 506. The computer system 100 may include at least one computing device having the processing circuitry 102. The system bus 506 provides an interface for system components including, but not limited to, the memory 504 and the processing circuitry 102. The processing circuitry 102 may include any number of hardware components for conducting data or signal processing or for executing computer code stored in memory 504. The processing circuitry 102 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 102 may further include computer executable code that controls operation of the programmable device.

The system bus 506 may be any of several types of bus structures that may further interconnect to a memory bus (with or without a memory controller), a peripheral bus, and/or a local bus using any of a variety of bus architectures. The memory 504 may be one or more devices for storing data and/or computer code for completing or facilitating methods described herein. The memory 504 may include database components, object code components, script components, or other types of information structure for supporting the various activities herein. Any distributed or local memory device may be utilized with the systems and methods of this description. The memory 504 may be communicably connected to the processing circuitry 102 (e.g., via a circuit or any other wired, wireless, or network connection) and may include computer code for executing one or more processes described herein. The memory 504 may include non-volatile memory 508 (e.g., read-only memory (ROM), erasable programmable read-only memory (EPROM), electrically erasable programmable read-only memory (EEPROM), etc.), and volatile memory 510 (e.g., random-access memory (RAM)), or any other medium which can be used to carry or store desired program code in the form of machine-executable instructions or data structures and which can be accessed by a computer or other machine with processing circuitry 102. A basic input/output system (BIOS) 512 may be stored in the non-volatile memory 508 and can include the basic routines that help to transfer information between elements within the computer system 100.

The computer system 100 may further include or be coupled to a non-transitory computer-readable storage medium such as the storage device 514, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 514 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 514 and/or in the volatile memory 510, which may include an operating system 516 and/or one or more program modules 518. All or a portion of the examples disclosed herein may be implemented as a computer program 520 stored on a transitory or non-transitory computer-usable or computer-readable storage medium (e.g., single medium or multiple media), such as the storage device 514, which includes complex programming instructions (e.g., complex computer-readable program code) to cause the processing circuitry 102 to carry out actions described herein. Thus, the computer-readable program code of the computer program 520 can comprise software instructions for implementing the functionality of the examples described herein when executed by the processing circuitry 102. In some examples, the storage device 514 may be a computer program product (e.g., readable storage medium) storing the computer program 520 thereon, where at least a portion of a computer program 520 may be loadable (e.g., into a processor) for implementing the functionality of the examples described herein when executed by the processing circuitry 102. The processing circuitry 102 may serve as a controller or control system for the computer system 100 that is to implement the functionality described herein.

The computer system 100 may include an input device interface 522 configured to receive input and selections to be communicated to the computer system 100 when executing instructions, such as from a keyboard, mouse, touch-sensitive surface, etc. Such input devices may be connected to the processing circuitry 102 through the input device
interface 522 coupled to the system bus 506 but can be connected through other interfaces, such as a parallel port, an Institute of Electrical and Electronic Engineers (IEEE) 1394 serial port, a Universal Serial Bus (USB) port, an IR interface, and the like. The computer system 100 may include an output device interface 524 configured to forward output, such as to a display, a video display unit (e.g., a liquid crystal display (LCD) or a cathode ray tube (CRT)). The computer system 100 may include a communications interface 526 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1. A computer system (100) comprising processing circuitry (102) configured to: obtain (200) cab-related data, including at least one of cab type (106), cab volume (108), presence of a sleeper cab (110), and window area (112) of a cab of a vehicle; obtain (202) a parameter indicative of a climate control setting (114) of the cab; obtain (204) a parameter indicative of a status and capacity of a vehicle battery (104); estimate (206) a remaining operational time of the vehicle battery during standstill using a computational model that takes as input at least the obtained cab-related data, the parameter indictive of a climate control setting, and the parameter indicative of the status and capacity of the vehicle battery.

Example 2. The computer system of example 1, wherein the computational model assigns weighted factors to different input parameters, the weights being representative of their relative impact on energy consumption, including at least: a first weight for cab volume; a second weight for climate control settings; and a third weight for battery state of charge and capacity.

Example 3. The computer system of example 1, wherein the computational model retrieves historical energy consumption data from a lookup table, the historical data including at least: past vehicle energy consumption patterns during standstill periods; driver-specific historical usage of climate control, and/or external climate conditions for similar parking scenarios.

Example 4. The computer system of example 1, wherein the computational model estimates the remaining operational time of the vehicle battery using a multi-step process, comprising: primary estimation of the remaining operational time based on real-time battery state of charge and current discharge rate; adjustment of the remaining operational time using input parameters, including cab-related data and climate control settings.

Example 5. The computer system of example 4, further comprising refinement of the remaining operational time through an AI-based predictive model, incorporating historical consumption patterns and weather forecasts.

Example 6. The computer system of example 4 or 5, further comprising application of a combined correction factor (K-factor), wherein: the K-factor represents the aggregated impact of all predicted loads on battery consumption; the K-factor is less than 1 and is applied as a multiplier to the primary estimated remaining operational time of the battery; and the adjusted remaining operational time is determined by multiplying the primary estimated remaining operational time by the K-factor.

Example 7. The computer system of any of the preceding examples, wherein the processing circuitry is further configured to obtain parking time data (304) from logistics planning, the parking time data including a predicted parking duration based on a planned vehicle route and/or scheduling constraints.

Example 8. The computer system of any of the preceding examples, wherein the processing circuitry is further configured to obtain parking time data (304) from mandatory driving and rest regulations, the parking time data including a required minimum rest period based on legal restrictions on driving hours.

Example 9. The computer system of any of the preceding examples, wherein the processing circuitry is further configured to receive parking time data (304) entered manually by the driver, the parking time data representing an expected duration of vehicle standstill.

Example 10. The computer system of any of examples 7 to 9, wherein the computational model compares the estimated remaining operational time of the vehicle battery to the obtained parking time data to determine whether the battery capacity is sufficient for the expected standstill period.

Example 11. The computer system of example 10, wherein the processing circuitry is further configured to generate a user notification if the estimated remaining operational time of the battery is less than the predicted parking duration, the notification including at least one of: a warning indicating insufficient battery capacity; a recommendation to reduce energy consumption by adjusting vehicle settings; or a suggestion to relocate to a site where charging or idling is permitted.

Example 12. The computer system of example 10 or 11, wherein the processing circuitry is further configured to generate a warning notification if the estimated remaining operational time of the battery is less than the predicted parking duration, the warning indicating insufficient battery capacity.

Example 13. The computer system of any of examples 10 to 12, wherein the processing circuitry is further configured to generate a recommendation to reduce energy consumption by adjusting vehicle settings if the estimated remaining operational time of the battery is less than the predicted parking duration.

Example 14. The computer system of any of examples 10 to 13, wherein the processing circuitry is further configured to recommend charging the battery using an external charger if the estimated remaining operational time is less than the predicted parking duration.

Example 15. The computer system of any of examples 10 to 13, wherein the processing circuitry is further configured to generate a suggestion to charge (302) the battery if the estimated remaining operational time of the battery is less than the predicted parking duration, the suggestion including advising on internal charging options based on available power sources of the vehicle, and wherein the processing circuitry is further configured to: determine whether the vehicle is an internal combustion engine vehicle; determine whether idling is permitted by local regulations; and if idling is permitted, recommend idling the engine to charge the battery during standstill.

Example 16. The computer system of any of examples 10 to 13, wherein the processing circuitry is further configured to generate a suggestion to charge the battery if the estimated remaining operational time of the battery is less than the predicted parking duration, the suggestion including advising on internal charging options based on available power sources of the vehicle, and wherein the processing circuitry is further configured to: determine whether the vehicle comprises a propulsion battery; determine whether energy from the propulsion battery can be used to charge the vehicle battery; and if energy from the propulsion battery can be used to charge the vehicle battery, recommend enabling internal charging from the propulsion battery to extend operational time.

Example 17. A vehicle comprising the computer system of any of examples 1 to 16.

Example 18. A computer-implemented method, comprising: obtaining, by processing circuitry of a computer system, cab-related data including at least one of cab type, cab volume, presence of a sleeper cab, or window area; obtaining, by the processing circuitry, a parameter indicative of a climate control setting of the vehicle; obtaining, by the processing circuitry, a parameter indicative of a status and capacity of a vehicle battery; estimating, by the processing circuitry, a remaining operational time of the vehicle battery during standstill using a computational model that takes as input at least the obtained cab-related data, the parameter indicative of the climate control setting, and the parameter indicative of the status and capacity of the vehicle battery.

Example 19. A computer program product comprising program code for performing, when executed by the processing circuitry, the method of example 18.

Example 20. A non-transitory computer-readable storage medium comprising instructions, which when executed by the processing circuitry, cause the processing circuitry to perform the method of example 18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. **In** contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (100) comprising processing circuitry (102) configured to:
obtain (200) cab-related data, including at least one of cab type (106), cab volume (108), presence of a sleeper cab (110), and window area (112) of a cab of a vehicle;
obtain (202) a parameter indicative of a climate control setting (114) of the cab;
obtain (204) a parameter indicative of a status and capacity of a vehicle battery (104);
estimate (206) a remaining operational time of the vehicle battery during standstill using a computational model that takes as input at least the obtained cab-related data, the parameter indictive of a climate control setting, and the parameter indicative of the status and capacity of the vehicle battery.

2. The computer system of claim 1, wherein the computational model assigns weighted factors to different input parameters, the weights being representative of their relative impact on energy consumption, including at least:
a first weight for cab volume;
a second weight for climate control settings; and
a third weight for battery state of charge and capacity.

3. The computer system of claim 1, wherein the computational model retrieves historical energy consumption data from a lookup table, the historical data including at least:
past vehicle energy consumption patterns during standstill periods;
driver-specific historical usage of climate control, and/or
external climate conditions for similar parking scenarios.

4. The computer system of claim 1, wherein the computational model estimates the remaining operational time of the vehicle battery using a multi-step process, comprising:
primary estimation of the remaining operational time based on real-time battery state of charge and current discharge rate;
adjustment of the remaining operational time using input parameters, including cab-related data and climate control settings.

5. The computer system of claim 4, further comprising refinement of the remaining operational time through an AI-based predictive model, incorporating historical consumption patterns and weather forecasts.

6. The computer system of claim 4 or 5, further comprising application of a combined correction factor (K-factor), wherein:
the K-factor represents the aggregated impact of all predicted loads on battery consumption;
the K-factor is less than 1 and is applied as a multiplier to the primary estimated remaining operational time of the battery; and
the adjusted remaining operational time is determined by multiplying the primary estimated remaining operational time by the K-factor.

7. The computer system of any of the preceding claims, wherein the processing circuitry is further configured to obtain parking time data (304) from logistics planning, the parking time data including a predicted parking duration based on a planned vehicle route and/or scheduling constraints.

8. The computer system of any of the preceding claims, wherein the processing circuitry is further configured to obtain parking time data (304) from mandatory driving and rest regulations, the parking time data including a required minimum rest period based on legal restrictions on driving hours.

9. The computer system of any of the preceding claims, wherein the processing circuitry is further configured to receive parking time data (304) entered manually by the driver, the parking time data representing an expected duration of vehicle standstill.

10. The computer system of any of claims 7 to 9, wherein the computational model compares the estimated remaining operational time of the vehicle battery to the obtained parking time data to determine whether the battery capacity is sufficient for the expected standstill period.

11. The computer system of claim 10, wherein the processing circuitry is further configured to generate a user notification if the estimated remaining operational time of the battery is less than the predicted parking duration, the notification including at least one of:
a warning indicating insufficient battery capacity;
a recommendation to reduce energy consumption by adjusting vehicle settings; or
a suggestion to relocate to a site where charging or idling is permitted.

12. A vehicle comprising the computer system of any of claims 1 to 11.

13. A computer-implemented method, comprising:
obtaining, by processing circuitry of a computer system, cab-related data including at least one of cab type, cab volume, presence of a sleeper cab, or window area;
obtaining, by the processing circuitry, a parameter indicative of a climate control setting of the vehicle;
obtaining, by the processing circuitry, a parameter indicative of a status and capacity of a vehicle battery;
estimating, by the processing circuitry, a remaining operational time of the vehicle battery during standstill using a computational model that takes as input at least the obtained cab-related data, the parameter indicative of the climate control setting, and the parameter indicative of the status and capacity of the vehicle battery.

14. A computer program product comprising program code for performing, when executed by the processing circuitry, the method of claim 13.

15. A non-transitory computer-readable storage medium comprising instructions, which when executed by the processing circuitry, cause the processing circuitry to perform the method of claim 13.
